# FASCICULE DE BREVET EUROPEEN

(11) **EP 0 750 131 B1**
(45) Date de publication et mention de la délivrance du brevet: **23.02.2000**
(21) Numéro de dépôt: 96401318.9
(22) Date de dépôt: 18.06.1996
(51) Int. Cl.: F16F 7/108

(54) **Support élastique pour masse vibrante**
Elastisches Lager für schwingende Masse
Elastic support for vibrating mass

(30) Priorité: 21.06.1995 FR 9507410
(43) Date de publication de la demande: 27.12.1996
(73) Titulaire: HUTCHINSON, 75008 Paris (FR)
(72) Inventeur: Allaire, Pierre, 28200 Chateaudun (FR)
(74) Mandataire: Picard, Jean-Claude Georges

(56) Documents cités:
- EP-A- 0 129 780
- EP-A- 0 183 197
- DE-A- 2 610 212
- DE-A- 2 807 160
- DE-A- 3 914 250
- FR-A- 2 431 639
- PATENT ABSTRACTS OF JAPAN vol. 007, no. 199 (M-240), 3 Septembre 1983 & JP-A-58 097525 (NISSAN JIDOSHA KK), 10 Juin 1983,
- PATENT ABSTRACTS OF JAPAN vol. 017, no. 555 (M-1492), 6 Octobre 1993 & JP-A-05 155263 (BRIDGESTONE CORP), 22 Juin 1993,
- PATENT ABSTRACTS OF JAPAN vol. 009, no. 117 (M-381), 22 Mai 1985 & JP-A-60 004643 (MITSUBISHI JUKOGYO KK), 11 Janvier 1985,

## Description

La présente invention concerne un support élastique pour masse vibrante, comportant au moins une première armature, une seconde armature et un bloc de matière élastique adhérisé entre lesdites armatures, celles-ci pouvant être soumises, par suite de vibrations d'excitation s'exerçant entre elles, à des déplacements relatifs vibratoires.

Il pourra s'agir notamment, mais non exclusivement, de supports d'amortisseurs ou de supports de moteurs.

Le document FR-A-2 431 639 décrit un support élastique antivibratoire à déphaseur incorporé, mais ce système présente l'inconvénient d'augmenter la transmission des vibrations aux basses fréquences, en provoquant même un pic de transmission à la fréquence de résonance.

Le but de la présente invention est d'éviter cet inconvénient inhérent aux déphaseurs, et d'atténuer, au moins à partir des basses fréquences, la rigidification dynamique d'un tel support lorsque la fréquence des vibrations augmente, et ceci sans faire usage d'un déphaseur.

Pour ce faire, un support du type précité est, conformément à la présente invention, caractérisé en ce qu'au moins une masse battante ou batteur est fixée au niveau d'une partie dudit bloc qui est soumise à des vibrations en opposition de phase avec celles d'une des deux dites armatures.

On utilise donc l'énergie du batteur à la résonance pour atténuer la rigidité dynamique du bloc de matière élastique lorsque les armatures sont soumises à des vibrations d'excitation. Le fait de fixer ce batteur sur la partie la plus déformée de ce bloc permettra d'avoir le maximum d'efficacité. A la résonance ce fonctionnement est donc inversé par rapport à celui d'un déphaseur.

Lorsque lesdites armatures et ledit bloc de matière élastique sont annulaires et coaxiales, le support peut encore se caractériser en ce que ledit batteur est constitué d'une bague ou de portions de bague coaxiales audit bloc, ce batteur pouvant de plus être métallique et relié audit bloc de matière élastique par une liaison annulaire en la même matière, enrobant éventuellement le batteur.

L'expression "au moins un batteur" utilisée plus haut signifie que l'on peut utiliser un ou plusieurs batteurs. Dans le cas d'une pluralité de batteurs, ceux-ci peuvent être reliés les uns aux autres en série ou en parallèle. Cela permettra d'obtenir des atténuations de la rigidité dynamique du bloc de matière élastique à différentes fréquences.

Ces dispositions seront mieux vues par la suite.

L'invention peut encore se mettre en oeuvre d'une façon complémentaire, en provoquant un effet de levier à l'intérieur du bloc de matière élastique, pour augmenter l'effet de la masse battante dans la partie du bloc qui est soumise aux vibrations en opposition de phase avec celles d'une des deux armatures.

A cet effet, un support élastique conforme à la présente invention peut encore être caractérisé en ce que dans ledit bloc de matière élastique est incorporée une plaque mince flexible et élastique dont le plan s'étend perpendiculairement à la direction de l'axe des efforts s'exerçant entre lesdites armatures et qui comporte des dents radiales s'étendant de part et d'autre d'une arête centrale entourant ledit axe.

Cette plaque se présente donc sous la forme d'un double peigne, par exemple circulaire si la forme globale du bloc de matière élastique est cylindrique, comme ce sera le cas en général, ce peigne comportant des dents radiales intérieures et des dents radiales extérieures reliées à leur base par ladite arête et pouvant pivoter élastiquement sur cette arête, de part et d'autre du plan de ladite plaque.

Dans ce mode de réalisation, le basculement des dents radiales autour de l'arête pourra être favorisé en donnant à cette arête une ligne d'appui sur toute sa longueur. Cette ligne d'appui pourra être obtenue par exemple en amincissant à son niveau l'épaisseur axiale de la matière élastique du bloc, notamment en prévoyant sur au moins une desdites armatures une partie rentrante ou gorge formant pivot pour ladite arête.

Grâce à ces dispositions on conçoit que l'on favorisera la mise en opposition de phase d'une partie prédéterminée du bloc, puisque les dents radiales de la plaque, en basculant sur son arête, transformeront des déformations intérieures du bloc de matière élastique, en phase avec les vibrations agissant sur l'une des armatures, en déformations extérieures en opposition de phase, au niveau de ladite partie considérée du bloc.

Des modes d'exécution de l'invention, ainsi que d'autres dispositions, prévues notamment pour diminuer la densité d'énergie des déformations dans le bloc de matière élastique, vont maintenant être décrits à titre d'exemples nullement limitatifs avec référence aux figures du dessin annexé dans lequel :
- la figure 1 est une vue en coupe axiale d'un support élastique équipé d'un batteur conformément à l'invention ;
- la figure 2 est un graphique montrant l'évolution de la raideur de ce support en fonction de la fréquence, par comparaison avec celle d'un support analogue dépourvu de batteur ;
- la figure 3 représente les variantes à plusieurs batteurs, la demi-coupe axiale de droite avec des batteurs reliés en série au bloc de matière élastique 5, et la demi-coupe axiale de gauche avec des batteurs reliés en parallèle audit bloc ;
- la figure 4 est une vue de dessous correspondante, sans cage de roulement ;
- la figure 5 montre l'allure de la raideur du support en fonction de la fréquence lorsque l'on utilise deux batteurs en série ;
- la figure 6 est une vue en coupe axiale d'un support élastique conforme à l'invention, équipé complémentairement d'une plaque mince à dents radiales, incluse dans le bloc de matière élastique ;
- la figure 7 est une vue en plan de cette plaque mince, selon la ligne VII-VII de la figure 6 ;
- la figure 8 est une vue en coupe axiale d'un support élastique encore conforme à l'invention mais comportant une variante ; et
- la figure 9 est une vue analogue de cette variante, avec une disposition complémentaire.

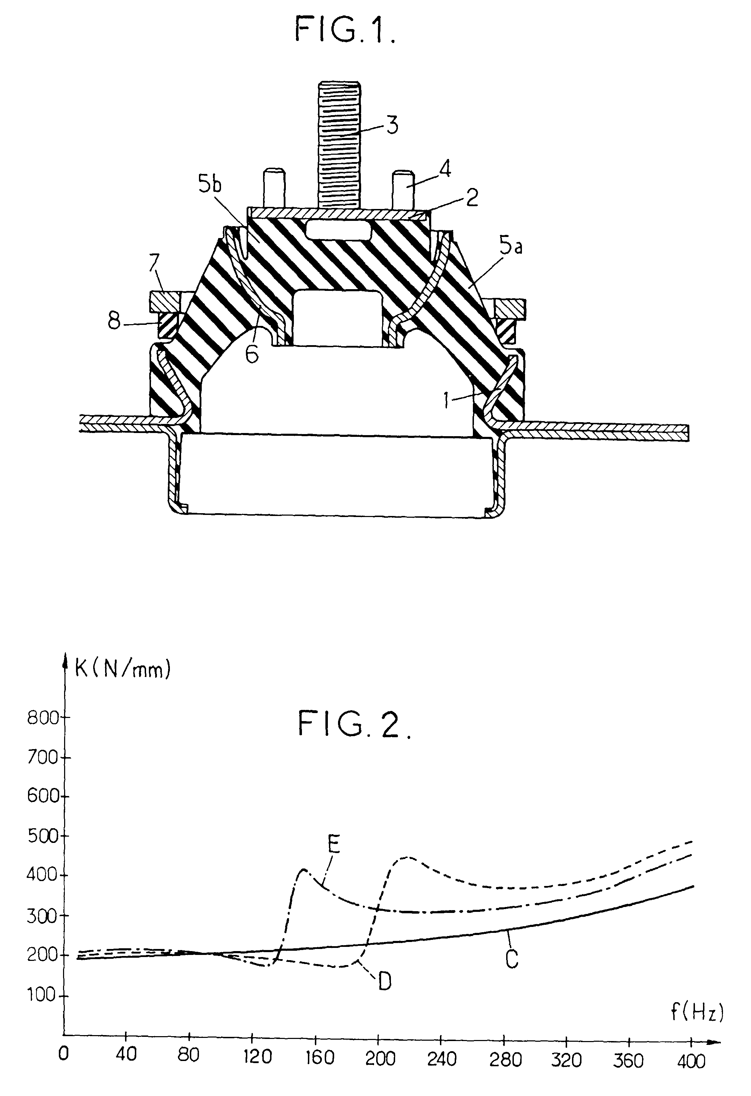

Le support représenté à la figure 1 comporte une armature extérieure annulaire en tôle 1 et une armature dite intérieure 2, réduite ici à une plaque circulaire coaxiale à l'armature 1 et pourvue de moyens 3, 4 de fixation à une masse vibrante quelconque (non représentée), l'armature 1 pouvant être reliée quant à elle à une partie fixe. Un bloc de matière élastique 5a, 5b, par exemple en caoutchouc naturel, en forme générale de cône également coaxial aux armatures, est adhérisé sur les armatures 1 et 2. Pour augmenter la rigidité statique de ce bloc, il peut être divisé en deux parties par une coupelle approximativement hémisphérique 6 sur les deux faces opposées de laquelle lesdites parties 5a et 5b du bloc de matière élastique sont également adhérisées. En 10 on a représenté une cage de roulement fixée à l'armature 1.

Un support élastique ainsi constitué, en soi connu, possède une raideur K (en N/mm) qui croît régulièrement avec la fréquence f (en Hz) selon la courbe C du graphique de la figure 2.

Pour éviter cet inconvénient et conformément à ce qui a été indiqué plus haut, on a fixé sur le bloc de matière élastique 5a, 5b un batteur 7. Ce batteur a été fixé au niveau de la partie la plus distendue de cette masse, et dont les déformations se trouvent en opposition de phase avec les vibrations d'excitation qui s'exercent sur l'armature 2, c'est-à-dire en phase avec les vibrations de compression s'exerçant entre les deux extrémités rigides du support. Cet emplacement se trouve être ici situé non loin de la base de la partie inférieure 5a du bloc de matière élastique. Dans l'exemple, le batteur 7 affecte la forme d'une bague métallique plate, par exemple en acier, reliée à la surface extérieure de la partie 5a par une liaison annulaire en caoutchouc 8. Cette liaison pourrait être moulée en même temps que le bloc élastique 5a, 5b et dans ce cas complètement enrober le batteur 7.

Avec un batteur de masse m = 250 g, la raideur K évolue selon la courbe D du graphique ; on voit qu'elle reste à peu près constante jusqu'à environ 180 Hz. Avec un batteur de masse m = 600 g, la raideur K évolue selon la courbe E du graphique ; on voit qu'elle reste à peu près constante jusqu'à environ 130 Hz.

Ces mesures ont été effectuées sous une charge de 2000 N dans une plage de ± 0,05 mm et de 0 à 400 Hz.

Il est à noter qu'en variante le batteur 7 pourrait être collé sur une bague de caoutchouc assurant la liaison au bloc de matière élastique.

L'emplacement exact de la liaison entre ce bloc et le batteur peut être déterminé par des essais mais préférentiellement par le calcul par éléments finis.

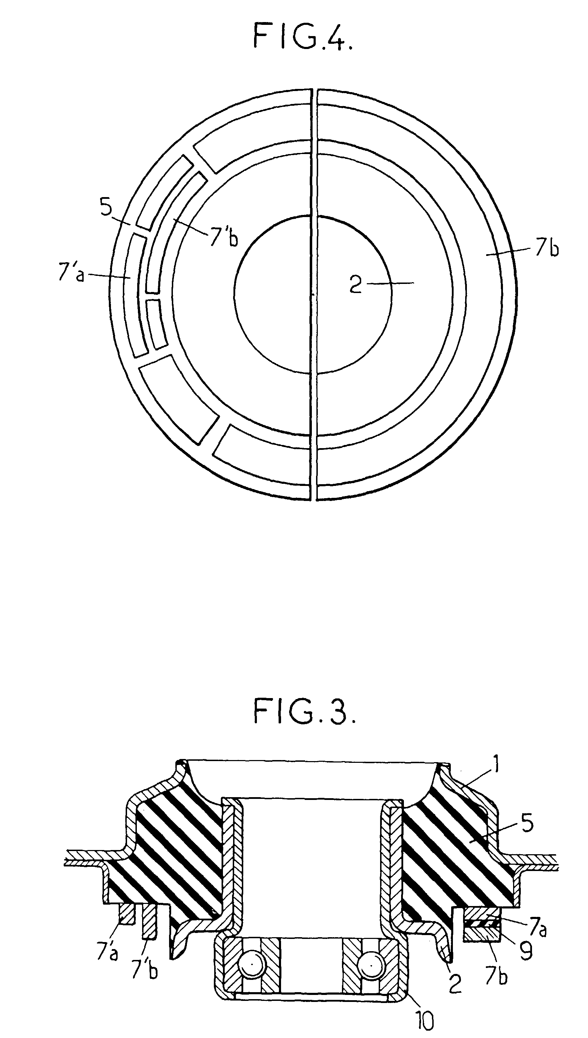

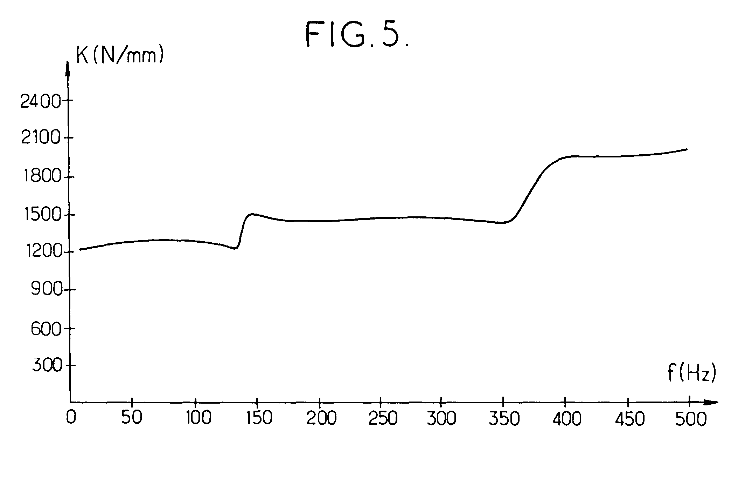

Dans le mode de réalisation de la figure 3, où l'on a utilisé les mêmes références que sur la figure 1 pour désigner les mêmes parties du support ou des parties jouant le même rôle, mais avec une cage de roulement 10 fixée dans l'armature centrale 2, on a représenté sur la demi-vue en coupe axiale de droite l'utilisation possible de deux batteurs 7a et 7b montés en série, c'est-à-dire l'un sur l'autre avec interposition d'un élément élastique 9, ces batteurs, de masses éventuellement différentes, et leur élément intercalaire 9, ayant la forme de trois bagues superposées. On peut obtenir ainsi le diagramme de la figure 5, sur laquelle on voit que l'on obtient une atténuation de la rigidité dynamique à différentes fréquences, en l'occurrence vers 150 et vers 380 Hz.

Il est à noter que dans le cas de plusieurs batteurs en série superposés, ils peuvent être reliés entre eux par des éléments élastiques 9 de rigidités identiques ou différentes.

On peut obtenir le même type de résultat avec le mode de réalisation représenté en demi-coupe axiale à la partie gauche de la figure 3, avec des batteurs 7'a et 7'b montés en parallèle, c'est-à-dire l'un autour de l'autre, ces batteurs pouvant encore avoir la forme de bagues, ou même de portions de bague, au moins sur une partie de la périphérie du support.

Dans ce cas les batteurs peuvent être reliés au bloc de matière élastique 5 par des éléments élastiques ayant encore des rigidités différentes ou identiques.

Ce mode de réalisation des batteurs en parallèle, annulaires et coaxiaux au bloc de matière élastique 5, permet leur liaison au bloc selon plusieurs diamètres sur différentes portions de cercle, dans le cas où ce bloc est assymétrique.

Il est à noter que dans le mode de réalisation de la figure 3 les batteurs sont fixés sur une partie du bloc 5 qui est plane et perpendiculaire à la direction principale dans laquelle s'exercent les vibrations, c'est-à-dire à l'axe de symétrie du support. Ce mode de réalisation est pour cette raison plus efficace, au point de vue de l'atténuation de la rigidité dynamique à certaines fréquences, que celui de la figure 1. Cela s'explique par le fait qu'à cet emplacement le caoutchouc du bloc 5, presque entièrement confiné entre les deux armatures 1, 2, est déformé en compression, et non en cisaillement.

Enfin, on a aussi constaté, dans un support conforme à l'invention, une atténuation de la rigidité dynamique radiale, c'est-à-dire dans la direction perpendiculaire à celle des vibrations, à certaines fréquences.

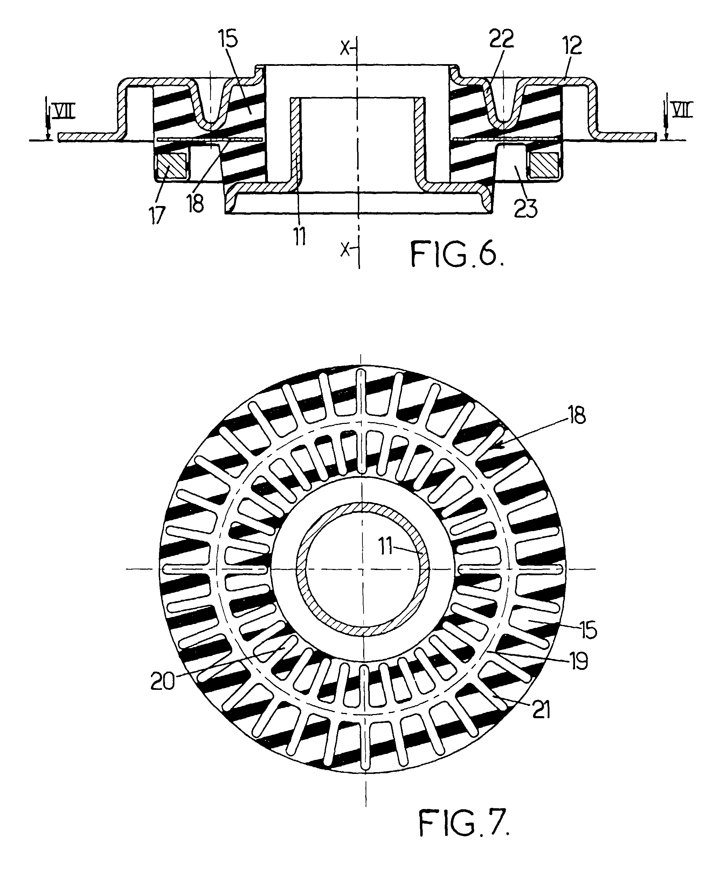

Dans le mode de réalisation des figures 6 et 7, on peut amplifier l'effet de la masse battante 17 en opposition de phase avec les vibrations principales agissant sur l'une des armatures 11, 12 en incorporant dans le bloc de matière élastique 15 une plaque élastique mince 18 en forme de peigne circulaire entourant l'axe X-X des efforts agissant entre les armatures. Cette plaque comporte une arête périphérique 19 de laquelle partent radialement des dents intérieures 20 et extérieures 21. Le fonctionnement de cette plaque a déjà été expliqué plus haut : on conçoit que des vibrations axiales agissant à l'extrémité des dents intérieures flexibles 20 seront transformées, par basculement autour de l'arête 19, en vibrations axiales en opposition de phase avec les précédentes, aux extrémités des dents extérieures flexibles 21, ce qui amplifie l'action du batteur ou masse battante annulaire 17. Pour favoriser ce basculement on augmente la raideur du matériau élastique 15 au niveau de l'arête 19 en amincissant son épaisseur axiale. Ceci est réalisé facilement en prévoyant une gorge annulaire emboutie 22 dans l'armature supérieure 12 vis-à-vis de l'arête 19, une gorge annulaire 23 à l'opposé dans le bloc 15 réduisant encore son épaisseur à ce niveau.

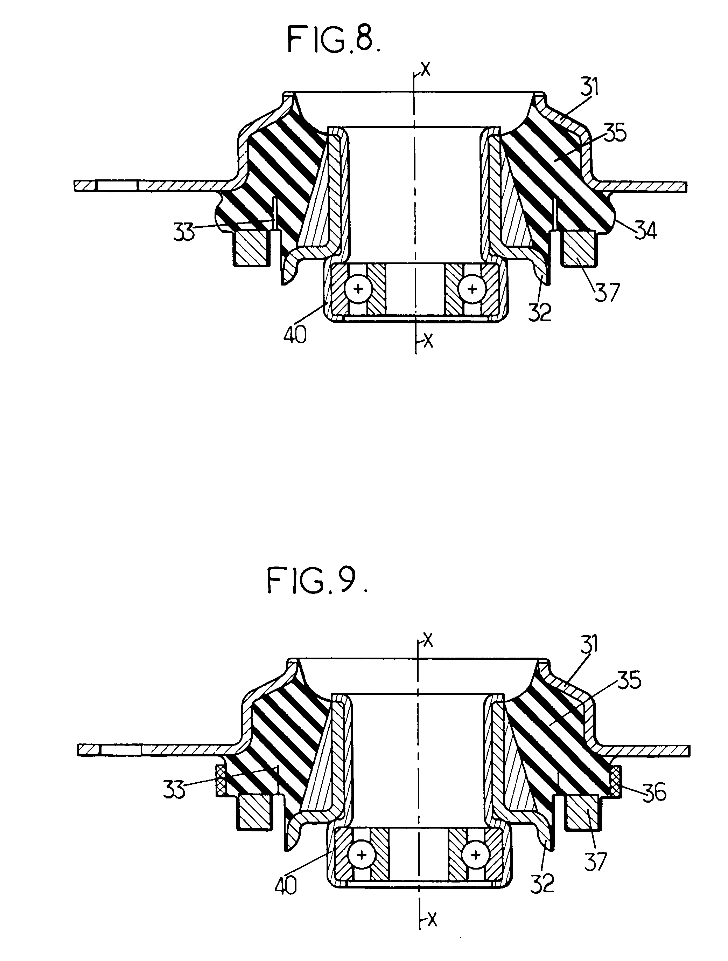

Dans les modes de réalisation des figures 8 et 9, sur lesquelles on a repris les mêmes références que sur la figure 3, augmentées de 30, pour désigner les mêmes parties du support ou des parties analogues ou jouant le même rôle, ce support étant représenté sous charge, on a ménagé une fente cylindrique de découplage 33 dans la base de la matière élastique 35, cette fente étant coaxiale à l'axe X-X et située à l'intérieur par rapport à la masse battante 37. Cette disposition permet de diminuer les contraintes internes dans le caoutchouc ou élastomère 35 ; en effet, cette fente permet de découpler la reprise des efforts sur l'attache de la fonction "batteur".

Le caoutchouc étant incompressible, on observe une dilatation radiale de sa masse (en 34 sur la figure 8), là où elle n'est pas maintenue comprimée par les armatures, lorsqu'elle est soumise à des efforts axiaux. Ce gonflement ne participe pas au déplacement du batteur. Pour empêcher cet effet et reporter cette déformation en axial, on ceinture avantageusement par une bague de rétreint 36 la partie latérale susceptible de subir ce gonflement, comme ceci a été représenté à la figure 9, cette bague étant sertie après moulage de la masse 35. Cette disposition empêche le gonflement radial 34 en favorisant la fonction de la masse battante 37.

L'association de la fente de découplage 33 à la bague de rétreint 36 permet d'obtenir dans la masse de matière élastique 35 une diminution notable du maximum de densité d'énergie de déformation : de l'ordre de 40 %, ce qui diminue la fatigue du caoutchouc ou matière synthétique constituant le bloc 35.

## Revendications

1. Support élastique pour masse vibrante, comportant au moins une première armature (1), une seconde armature (2) et un bloc (5 ; 5a, 5b) de matière élastique adhérisé entre lesdites armatures, celles-ci pouvant être soumises, par suite de vibrations d'excitation s'exerçant au moins sur l'une d'elles, à des déplacements relatifs vibratoires, caractérisé en ce qu'au moins un batteur (7 ; 7a, 7b ; 7'a, 7'b) est fixé au niveau d'une partie dudit bloc (5 ; 5a, 5b) qui est soumise à des vibrations en opposition de phase avec celles d'une des deux dites armatures (1, 2).

2. Support élastique selon la revendication 1, dans lequel lesdites armatures (1, 2) et ledit bloc de matière élastique (5a, 5b) sont annulaires et coaxiales, caractérisé en ce que ledit batteur (7) est constitué d'une bague ou de portions de bague coaxiales audit bloc (5a, 5b).

3. Support élastique selon la revendication 1 ou 2, caractérisé en ce que ledit batteur (7) est métallique.

4. Support élastique selon l'une quelconque des revendications précédentes, caractérisé en ce que ledit batteur (7) est relié audit bloc de matière élastique (5a, 5b) par une liaison annulaire (8) en la même matière, enrobant éventuellement le batteur (7).

5. Support élastique selon l'une quelconque des revendications précédentes, comportant plusieurs batteurs, caractérisé en ce que ces batteurs (7a, 7b) sont montés en série sur ledit bloc de matière élastique (5), avec interposition entre eux d'un élément élastique (9).

6. Support élastique selon l'une quelconque des revendications 1 à 4, comportant plusieurs batteurs, caractérisé en ce que ces batteurs (7'a, 7'b) sont montés mutuellement en parallèle sur ledit bloc de matière élastique (5).

7. Support élastique selon la revendication 5 ou 6, caractérisé en ce que les batteurs sont reliés entre eux ou audit bloc (5) par des éléments intercalaires (9) de rigidités identiques ou différentes.

8. Support élastique selon l'une quelconque des revendications 5 à 7, caractérisé en ce que lesdits batteurs sont annulaires ou en portions de cercle.

9. Support élastique selon l'une quelconque des revendications précédentes, caractérisé en ce que ledit batteur est fixé en un emplacement de la surface dudit bloc de matériau élastique (5) qui est sensiblement perpendiculaire à la direction principale dans laquelle s'exercent les vibrations entre lesdites armatures (1, 2).

10. Support élastique selon l'une quelconque des revendications précédentes, caractérisé en ce que dans ledit bloc de matière élastique (15) est incorporée une plaque mince flexible et élastique (18) dont le plan s'étend perpendiculairement à la direction de l'axe (X-X) des efforts s'exerçant entre lesdites armatures (11, 12) et qui comporte des dents radiales (20, 21) s'étendant de part et d'autre d'une arête centrale (19) entourant ledit axe.

11. Support élastique selon la revendication 10, caractérisé en ce qu'au moins l'une desdites armatures (12) comporte au niveau de ladite arête (19) une partie rentrante (22) amincissant l'épaisseur axiale du matériau élastique (15) à ce niveau et fournissant à ladite plaque (18) une ligne d'appui favorisant le basculement entre ses dents radiales intérieures (20) et ses dents radiales extérieures (21).

12. Support élastique selon l'une quelconque des revendications précédentes, caractérié en ce qu'une fente de découplage cylindrique (33) est ménagée dans le bloc de matière élastique (35), à l'intérieur par rapport à la masse battante (37), cette fente étant associée à une bague de rétreint (36) enserrant la partie latérale dudit bloc qui n'est pas maintenue radialement par les armatures (31, 32).

## Patentansprüche

1. Elastisches Lager für eine schwingende Masse, umfassend wenigstens einen ersten Träger (1), einen zweiten Träger (2) und einen zwischen den Trägern angeordneten und mit diesen in Verbindung stehenden Block (5; 5a, 5b) aus einem elastischen Material, wobei die Träger infolge von auf wenigstens einen der Träger ausgeübten Erregerschwingungen Relativschwingungsverschiebungen aussetzbar sind, dadurch gekennzeichnet, daß
wenigstens ein Schwinger (7; 7a, 7b; 7'a, 7'b) an dem Teil des Blocks (5; 5a, 5b) angebracht ist, der Schwingungen ausgesetzt ist, die zu jenen des einen der beiden Träger (1, 2) gegenphasig sind.

2. Elastisches Lager nach Anspruch 1, wobei die Träger (1, 2) und der Block (5a, 5b) aus dem elastischen Material ringförmig und koaxial sind, dadurch gekennzeichnet, daß der Schwinger (7) aus einem Ring oder Ringteilen gebildet ist, die zum Block (5a, 5b) koaxial sind.

3. Elastisches Lager nach Anspruch 1 oder 2, dadurch gekennzeichnet, daß der Schwinger (7) aus Metall besteht.

4. Elastisches Lager nach einem der vorhergehenden Ansprüche, dadurch gekennzeichnet, daß der Schwinger (7) mit dem Block (5a, 5b) aus dem elastischen Material über eine ringförmige Verbindung (8) aus demselben Material verbunden ist.

5. Elastisches Lager nach einem der vorhergehenden Ansprüche, umfassend mehrere Schwinger, dadurch gekennzeichnet, daß die Schwinger (7a, 7b) in Reihe an dem Block (5) aus dem elastischen Material angebracht sind, wobei zwischen den Schwingern (7a, 7b) ein elastisches Element (9) angeordnet ist.

6. Elastisches Lager nach einem der Ansprüche 1 bis 4, umfassend mehrere Schwinger, dadurch gekennzeichnet, daß die Schwinger (7'a, 7'b) parallel zueinander an dem Block aus dem elastischen Material angebracht sind.

7. Elastisches Lager nach Anspruch 5 oder 6, dadurch gekennzeichnet, daß die Schwinger untereinander oder mit dem Block (5) über Zwischenelemente (9) gleicher oder verschiedener Starrheiten verbunden sind.

8. Elastisches Lager nach einem der Ansprüche 5 bis 7, dadurch gekennzeichnet, daß die Schwinger ringförmig oder kreissegmentförmig sind.

9. Elastisches Lager nach einem der vorhergehenden Ansprüche, dadurch gekennzeichnet, daß der Schwinger an einem zur Hauptrichtung der zwischen den Trägern (1, 2) ausgeübten Schwingungen in etwa senkrechten Teil der Oberfläche des Blocks (5) aus dem elastischen Material befestigt ist.

10. Elastisches Lager nach einem der vorhergehenden Ansprüche, dadurch gekennzeichnet, daß in den Block (15) aus dem elastischen Material eine dünne, flexible und elastische Platte (18) integriert ist, deren Ebene sich senkrecht zur Richtung der Achse der zwischen den Trägern (11, 12) wirkenden Kräfte erstreckt und die radiale Zähne (20, 21) umfaßt, die sich von einem die Achse umgebenden zentralen Steg (19) aus seitlich erstrecken.

11. Elastisches Lager nach Anspruch 10, dadurch gekennzeichnet, daß wenigstens der eine Träger (12) am Steg (19) einen Nutabschnitt (22) aufweist, der die axiale Dicke des elastischen Materials (15) an dieser Stelle verringet und die Platte (18) mit einer Auflagerlinie versieht, die eine Kippbewegung zwischen den radial inneren Zähnen (20) und den radial äußeren Zähnen (21) fördert.

12. Elastisches Lager nach einem der vorhergehenden Ansprüche, dadurch gekennzeichnet, daß in dem Block (35) aus dem elastischen Material, im Verhältnis zur schwingenden Masse (37) innerhalb, ein zylindrischer Entkopplungsschlitz (33) vorgesehen ist, dem ein Haltering (36) zugeordnet ist, der den seitlichen Teil des Blocks einfaßt, den die Träger (31, 32) nicht radial halten.

## Claims

1. Elastic support for a vibrating mass, including at least a first fixture (1), a second fixture (2) and a block (5; 5a, 5b) of elastic material bonded between the said fixtures, the latter being capable of being subjected, as a result of excitation vibrations exerted on at least one of them, to relative vibrational displacements, characterized in that at least one oscillator (7; 7a, 7b; 7'a, 7'b) is fixed to one part of the said block (5; 5a, 5b) which is subjected to vibrations in phase opposition with those of one of the two said fixtures (1, 2).

2. Elastic support according to Claim 1, in which the said fixtures (1, 2) and the said block of elastic material (5a, 5b) are annular and coaxial, characterized in that the said oscillator (7) consists of a ring or ring portions coaxial with the said block (5a, 5b).

3. Elastic support according to Claim 1 or 2, characterized in that the said oscillator (7) is metallic.

4. Elastic support according to any one of the preceding claims, characterized in that the said oscillator (7) is connected to the said block of elastic material (5a, 5b) by an annular linkage (8) made of the same material, optionally encasing the oscillator (7).

5. Elastic support according to any one of the preceding claims, including a plurality of oscillators, characterized in that these oscillators (7a, 7b) are mounted in series on the said block of elastic material (5), with the interposition of an elastic element (9) between them.

6. Elastic support according to any one of Claims 1 to 4, including a plurality of oscillators, characterized in that these oscillators (7'a, 7'b) are mounted mutually in parallel on the said block of elastic material (5).

7. Elastic support according to Claim 5 or 6, characterized in that the oscillators are connected together or to the said block (5) by intermediate elements (9) of identical or different rigidity.

8. Elastic support according to any one of Claims 5 to 7, characterized in that the said oscillators are annular or in the form of circle portions.

9. Elastic support according to any one of the preceding claims, characterized in that the said oscillator is fixed at a location on the surface of the said block of elastic material (5) which is substantially perpendicular to the principal direction in which the vibrations are exerted between the said fixtures (1, 2).

10. Elastic support according to any one of the preceding claims, characterized in that a flexible and elastic thin plate (18) is incorporated in the said block of elastic material (15), the plane of which plate extends perpendicularly to the direction of the axis (X-X) of the forces exerted between the said fixtures (11, 12), and which plate includes radial teeth (20, 21) extending on either side of a central ridge (19) surrounding the said axis.

11. Elastic support according to Claim 10, characterized in that at least one of the said fixtures (12) includes, level with the said ridge (19), a re-entrant part (22) narrowing the axial thickness of the elastic material (15) at this level and providing the said plate (18) with a bearing line promoting tilting between its inner radial teeth (20) and its outer radial teeth (21).

12. Elastic support according to any one of the preceding claims, characterized in that a cylindrical decoupling slot (33) is formed in the block of elastic material (35), on the inside relative to the oscillating mass (37), this slot being associated with a retaining ring (36) enclosing the lateral part of the said block which is not radially held by the fixtures (31, 32).
